# EUROPEAN PATENT APPLICATION

(11) **EP 4 116 355 A1**
(43) Date of publication of application: **11.01.2023**
(21) Application number: 21764485.5
(22) Date of filing: 22.02.2021
(51) Int. Cl.: C08G 65/36, C09J 171/14, H01M 4/62, H01M 10/052, B60L 50/64

(54) **COMPOSITE POLYMER, AND PREPARATION METHOD THEREFOR AND APPLICATION THEREOF**

(30) Priority: 03.03.2020 CN 202010139706
(71) Applicant: SVOLT ENERGY TECHNOLOGY CO., LTD, Changzhou, Jiangsu 213200 (CN)
(72) Inventor: LI, Xiaoshuan, hangzhou, Jiangsu 213200 (CN); LV, Wenbin, hangzhou, Jiangsu 213200 (CN); WEI, Liyong, hangzhou, Jiangsu 213200 (CN); XU, Sai, hangzhou, Jiangsu 213200 (CN); DENG, Suxiang, hangzhou, Jiangsu 213200 (CN); MA, Zhonglong, hangzhou, Jiangsu 213200 (CN)
(74) Representative: De Bonis, Paolo
(86) International application number: PCT/CN2021/077191
(87) International publication number: WO 2021/175122

(57) **Abstract**

Disclosed are a composite polymer, and a preparation method therefor and an application thereof. The composite polymer is a block copolymer of polyfurfuryl alcohol and polyoxyethylene. The composite polymer has excellent bonding performance, electron conduction performance, and ion conduction performance, is beneficial for improving the quality and the peeling force of a pole piece, and improves the cycle performance, the rate capability, and the safety performance of a battery.

## Description

### TECHNICAL FIELD

The present disclosure relates to the technical field of lithium batteries and applications thereof, and for example, relates to a composite polymer, and a preparation method therefor and an application thereof.

### BACKGROUND

With the rapid development and progress of society, the problems of energy shortage and environmental pollution have been increasingly serious, and there are more and more urgent needs for clean energy; meanwhile, new energy vehicles are increasingly popular, and the development of energy power is gradually expanding, which requires the development of lithium-ion batteries with higher energy density. At present, lithium iron phosphate and ternary materials are mostly used for the positive electrode of lithium-ion power batteries; with the increase of requirements on energy density, it is more and more difficult to continually improve energy density based on the existing design system of cells, especially for high-endurance electric vehicles.

In order to achieve high voltage and high energy density, the conventional liquid power batteries generally employ the organic solvent as electrolyte liquid, but the organic electrolyte liquid contains flammable substances, which causes potential safety hazards. With the increase of the size of the power batteries, the usage amount of flammable organic solvent increases, and the heat radiation increases, resulting in that batteries easily get hot, and increasing the risk of thermal runaway for batteries. There is a spate of spontaneous combustion of new energy vehicles, and people have been trying to develop novel batteries which are safer. Since all-solid-state batteries have no electrolyte liquid, the cell can be more stable, and thus, the batteries attract widespread attention; however, currently, the all-solid-state battery technology is still immature, and there is still a long way to go before industrialization. As an intermediate product between liquid batteries and all-solid-state batteries, semi-solid batteries can reduce the amount of electrolyte liquid inside the cells and improve the cell safety to a certain extent, which are the closest and easiest interim product to mass production so far.

Therefore, the existing lithium batteries need to be further improved.

### SUMMARY

The present disclosure provides a composite polymer, and a preparation method therefor and an application thereof.

In an embodiment, the present disclosure provides a composite polymer, and the composite polymer is a block copolymer of polyfurfuryl alcohol and polyoxyethylene.

In some cases, during the preparation of semi-solid batteries, the commonly used binder for the positive electrode is polyvinylidene fluoride (PVDF); the binder PVDF has three main interactions in the electrode: the interaction between binder and active material particles, the interaction between binder and current collector and the interaction between binder molecule and binder molecule. The binder viscosity is an important process parameter; if the binder viscosity is too low, the viscosity of the prepared slurry will be low, so that the slurry will have too high fluidity, easily undergo sedimentation and have poor storage stability, and accordingly, a thickener needs to be added additionally; however, if the binder viscosity is too high, there will exist disadvantages to the dispersion of the active material and the conductive agent, and since the binder has no electrical conductivity, it may increase the internal resistance of the battery and affect the performance of the battery. In order to improve the energy density and rate capability of power batteries, the cell system is usually designed to have the higher active material content and lower binder content. However, the reduction of the binder amount will affect the slurry-making process and reduce the slurry stability, the prepared electrode sheet will have reduced peeling strength, and thus the coating layer will peel easily from the current collector, which affects the electrical performance and causes potential hazards to the safety performance of the battery.

In an embodiment provided by the present disclosure, the composite polymer itself has the characteristic of electron and ion transport; compared with conventional binder materials, the composite polymer realizes lithium ion transporting inside freely; compared with ordinary ionic polymers, the composite polymer has increased electrical conductivity due to the electron cloud formed by π^{∗}C=C chemical bonds. Meanwhile, since the composite polymer contains a structure similar to the binder, it can be fully mixed with the positive electrode active material more easily and form a uniform phase, improving the adhesive strength and peeling strength of the electrode sheet. Furthermore, the composite polymer can be rapidly gelled after adding the electrolyte liquid, which facilitates the electron and ion transporting inside the electrode sheet, and also protects the inside of the cell from too much electrolyte liquid, thereby improving the safety performance of the battery.

In an embodiment, the composite polymer is a chain polymer, a star polymer or a dendrimer.

In an embodiment, an average molecular mass of the composite polymer is 45000-55000, for example, 46000, 48000, 50000, 52000, 54000, etc.

In an embodiment, a solid content of the composite polymer is 1.2wt%-18wt%, for example, 2wt%, 4wt%, 6wt%, 8wt%, 10wt%, 12wt%, 14wt%, 16wt%, etc.

In an embodiment, the present disclosure provides a preparation method of the composite polymer, and the method includes the following step:
mixing and stirring an initiator, a solvent, polyoxyethylene and furfuryl alcohol to obtain the composite polymer.

In an embodiment of the present disclosure, under the effect of initiator and solvent, furfuryl alcohol can be polymerized, and the polymerized furfuryl alcohol can react with polyoxyethylene to obtain a block polymer of polyfurfuryl alcohol and polyoxyethylene. Under the synergistic effect of polyfurfuryl alcohol and polyoxyethylene, the composite polymer itself has the characteristic of electron and ion transport; compared with conventional binder materials, the composite polymer realizes lithium ion transporting inside freely; compared with ordinary ionic polymers, the composite polymer has increased electrical conductivity due to the electron cloud formed by π^{∗}C=C chemical bonds. Meanwhile, since the composite polymer contains a structure similar to the binder, it can be fully mixed with the positive electrode active material more easily and form a uniform phase, improving the adhesive strength and peeling strength of the electrode sheet. Furthermore, the composite polymer can be rapidly gelled after adding the electrolyte liquid, which facilitates the electron and ion transporting inside the electrode sheet, and also protects the inside of the cell from too much electrolyte liquid, thereby improving the safety performance of the battery.

In an embodiment, the initiator is selected from at least one of oxalic acid and hydrochloric acid; for example, the initiator may be oxalic acid, or hydrochloric acid, or a mixture of oxalic acid and hydrochloric acid.

In an embodiment, the initiator is selected from oxalic acid.

In an embodiment, the solvent is selected from at least one of N-methylpyrrolidone (NMP) and dimethyl sulfoxide; for example, the solvent may be N-methylpyrrolidone, or dimethyl sulfoxide, or a mixture of N-methylpyrrolidone and dimethyl sulfoxide.

In an embodiment, a mass ratio of the initiator to the solvent is (2-4) : (90-98), in which 2-4 may be 2.5, 3.0, 3.5, etc., and 90-98 may be 91, 92, 93, 94, 95, 96, 97, etc.

In an embodiment, the present disclosure provides a positive electrode slurry, and the positive electrode slurry is composed of a positive electrode active material and a colloidal solution, in which the colloidal solution is the composite polymer according an embodiment of the present disclosure or the composite polymer prepared by the method according to an embodiment of the present disclosure.

The positive electrode slurry provided in an embodiment of the present disclosure contains the above composite polymer, and the composite polymer not only has the adhesive performance as the binder, which can improve its compatibility with the positive electrode active material, facilitate the positive electrode active material dispersing in the electrode sheet uniformly, increase the adhesive strength and peeling strength of the electrode sheet, and improve the rate cycle capability of the battery, but also has the electrical conductivity and ionic conductivity, which allows itself to serve as a carrier for lithium ion transport, exert an effect as the solvent of electrolyte liquid to facilitate lithium ion transporting inside the electrode sheet synergistically, and improve the rate capability of the battery. Therefore, the positive electrode slurry has no need to be added with binders or conductive agents additionally, and the absence of material components in the slurry is also conducive to improving the homogeneity of the slurry, thereby improving the quality of the battery. Furthermore, the composite polymer can also improve the mechanical properties of the electrode sheet, endow the electrode sheet with flexibility, effectively alleviate the volume expansion of the electrode sheet during the charging and discharging process, maintain the stability of the electrode, thus further improve the transport speed of lithium ion in the electrode sheet, and improve the rate capability.

In an embodiment, a solid content of the positive electrode slurry is 50wt%-80wt%, for example, 55wt%, 60wt%, 65wt%, 70wt%, 75wt%, etc.

In an embodiment, a viscosity of the positive electrode slurry is 3000-20000 cP, for example, 4000 cP, 8000 cP, 12000 cP, 16000 cP, etc.

In an embodiment, the positive electrode active material is selected from at least one of nickel-cobalt-manganese (NCM) and nickel-cobalt lithium aluminate (NCA); for example, the positive active material may be NCM, or NCA, or a mixture of NCM and NCA.

In an embodiment, the present disclosure provides a lithium battery, and the lithium battery includes a positive electrode sheet prepared from the positive electrode slurry according to an embodiment of the present disclosure.

The lithium battery provided in an embodiment of the present disclosure includes the positive electrode sheet prepared from the positive electrode slurry which is composed of the positive electrode active material and the above composite polymer, because it has the above composite polymer, and the composite polymer not only has the adhesive performance as the binder, which can improve its compatibility with the positive electrode active material, facilitate the positive electrode active material dispersing in the electrode sheet uniformly, increase the adhesive strength and peeling strength of the electrode sheet, and improve the rate cycle capability of the battery, but also has the electrical conductivity and ionic conductivity, which allows itself to serve as a carrier for lithium ion transport, exert an effect as the solvent of electrolyte liquid to facilitate lithium ion transporting inside the electrode sheet synergistically, and improve the rate capability of the battery. Meanwhile, because the positive electrode slurry has no need to be added with binders or conductive agents additionally, the absence of material components in the slurry is also conducive to improving the homogeneity of the slurry, thereby improving the quality of the battery. Furthermore, the composite polymer can also improve the mechanical properties of the electrode sheet, endow the electrode sheet with flexibility, effectively alleviate the volume expansion of the electrode sheet during the charging and discharging process, maintain the stability of the electrode, thus further improve the transport speed of lithium ion in the electrode sheet, and improve the rate capability.

In an embodiment, the present disclosure provides a vehicle, and the vehicle includes the lithium battery according to an embodiment of the present disclosure.

The vehicle provided in an embodiment of the present disclosure includes the above lithium battery, and the lithium battery has excellent cycle performance and rate capability as well as good safety performance and consistency due to including the positive electrode sheet prepared from the above positive electrode slurry. Therefore, the battery is conducive to improving the endurance and safety performance of the vehicle.

Additional aspects and advantages of the present disclosure will be partially set forth in the following description, which will become apparent in the following description, or will be understood through embodiments of the present disclosure.

### BRIEF DESCRIPTION OF DRAWINGS

Drawings are used to provide a further understanding of the technical solutions of the present disclosure, constitute a part of the specification, explain the technical solutions of the present disclosure in conjunction with embodiments of the present application, and have no limitation on the technical solutions of the present disclosure.
FIG. 1 shows a SEM image of a coating layer of a positive electrode sheet prepared in an example;
FIG. 2 shows charging-discharging performance curves of a positive electrode sheet prepared in an example;
FIG. 3 shows cycle performance curves of positive electrode sheets prepared in an example and a comparative example at 0.5C;
FIG. 4 shows rate capability curves of positive electrode sheets prepared in an example and a comparative example at 0.1C, 0.33C, 0.5C, 1C and 2C;
FIG. 5 shows a SEM image of a coating layer of a positive electrode sheet prepared in a comparative example.

### DETAILED DESCRIPTION

The technical solutions of the present disclosure will be further described below with reference to drawings and through specific embodiments.

In one aspect of the present disclosure, the present disclosure provides a composite polymer, and according to an embodiment of the present disclosure, the composite polymer is a block copolymer of polyfurfuryl alcohol and polyoxyethylene. The composite polymer itself has the characteristic of electron and ion transport. Compared with conventional binder materials, the composite polymer realizes lithium ion transporting inside freely; compared with ordinary ionic polymers, the composite polymer has increased electrical conductivity due to the electron cloud formed by π^{∗}C=C chemical bonds. Meanwhile, since the composite polymer contains a structure similar to the binder, it can be fully mixed with the positive electrode active material more easily and form a uniform phase, improving the adhesive strength and peeling strength of the electrode sheet. Furthermore, the composite polymer can be rapidly gelled after adding the electrolyte liquid, which facilitates the electron and ion transporting inside the electrode sheet, and also protects the inside of the cell from too much electrolyte liquid, thereby improving the safety performance of the battery.

According to an embodiment of the present disclosure, the composite polymer may be a chain polymer, a star polymer or a dendrimer, which can be selected by those skilled in the art according to needs and preparation processes. Furthermore, an average molecular mass of the composite polymer is not particularly limited, which can be selected by those skilled in the art according to actual needs; for example, it may be 45000-55000, and the average molecular mass is 50000 in an embodiment of the present disclosure. It should be noted that, affected by the reaction temperature, the polymer with a higher average molecular mass can be generated at high temperature, and the polymer viscosity will increase; therefore, the viscosity of the composite polymer can be increased by increasing the reaction temperature, and for example, the reaction temperature can be increased to 55°C. Furthermore, a solid content of the composite polymer is not particularly limited, and for example, it may be 1.2wt%-18wt%, and the viscosity of the polymer slurry can be increased by increasing the solid content.

According to the composite polymer in an embodiment of the present disclosure, the composite polymer itself has the characteristic of electron and ion transport; compared with conventional binder materials, the composite polymer realizes lithium ion transporting inside freely; compared with ordinary ionic polymers, the composite polymer has increased electrical conductivity due to the electron cloud formed by π^{∗}C=C chemical bonds. Meanwhile, since the composite polymer contains a structure similar to the binder, it can be fully mixed with the positive electrode active material more easily and form a uniform phase, improving the adhesive strength and peeling strength of the electrode sheet. Furthermore, the composite polymer can be rapidly gelled after adding the electrolyte liquid, which facilitates the electron and ion transporting inside the electrode sheet, and also protects the inside of the cell from too much electrolyte liquid, thereby improving the safety performance of the battery.

In another aspect of the present disclosure, the present disclosure provides a method for preparing a composite polymer; according to an embodiment of the present disclosure, the method includes: mixing and stirring an initiator, a solvent, polyoxyethylene and furfuryl alcohol, so as to obtain the composite polymer. Under the effect of initiator and solvent, furfuryl alcohol can be polymerized, and the polymerized furfuryl alcohol can react with polyoxyethylene to obtain a block polymer of polyfurfuryl alcohol and polyoxyethylene. Specifically, the initiator and the solvent can be mixed and stirred firstly, and then the polyoxyethylene and furfuryl alcohol can be added and reacted by stirring and mixing, so as to obtain the composite polymer.

According to an embodiment of the present disclosure, the specific type of the initiator and the solvent is not particularly limited, which can be selected by those skilled in the art according to actual needs; for example, the initiator may be selected from at least one of oxalic acid and hydrochloric acid, and may be selected from oxalic acid; the solvent may be selected from at least one of N-methylpyrrolidone and dimethyl sulfoxide. The use of the above initiator and solvent is beneficial to reducing the cost, and facilitates controlling the reaction speed at the same time. In some embodiments, a mass ratio of the initiator to the solvent is not particularly limited either; for example, it may be 2-4:90-98; in an embodiment of the present disclosure, the mass ratio of the initiator to the solvent is 1:30, and the too high mass ratio will bring the increased viscosity of the slurry.

According to the preparation method of an embodiment of the present disclosure, under the effect of initiator and solvent, furfuryl alcohol may be polymerized, and the polymerized furfuryl alcohol can react with polyoxyethylene to obtain a block polymer of polyfurfuryl alcohol and polyoxyethylene. Under the synergistic effect of polyfurfuryl alcohol and polyoxyethylene, the composite polymer itself has the characteristic of electron and ion transport; compared with conventional binder materials, the composite polymer realizes lithium ion transporting inside freely; compared with ordinary ionic polymers, the composite polymer has increased electrical conductivity due to the electron cloud formed by π^{∗}C=C chemical bonds. Meanwhile, since the composite polymer contains a structure similar to the binder, it can be fully mixed with the positive electrode active material more easily and form a uniform phase, improving the adhesive strength and peeling strength of the electrode sheet. Furthermore, the composite polymer can be rapidly gelled after adding the electrolyte liquid, which facilitates the electron and ion transporting inside the electrode sheet, and also protects the inside of the cell from too much electrolyte liquid, thereby improving the safety performance of the battery.

In another aspect of the present disclosure, the present disclosure provides a positive electrode slurry; according to an embodiment of the present disclosure, the positive electrode slurry is composed of a positive electrode active material and a colloidal solution, and the colloidal solution is the above composite polymer or the composite polymer obtained from the above method for preparing a composite polymer. The positive electrode slurry contains the above composite polymer, and the composite polymer not only has the adhesive performance as the binder, which can improve its compatibility with the positive electrode active material, facilitate the positive electrode active material dispersing in the electrode sheet uniformly, increase the adhesive strength and peeling strength of the electrode sheet, and improve the rate cycle capability of the battery, but also has the electrical conductivity and ionic conductivity, which allows itself to serve as a carrier for lithium ion transport, exert an effect as the solvent of electrolyte liquid to facilitate lithium ion transporting inside the electrode sheet synergistically, and improve the rate capability of the battery. Therefore, the positive electrode slurry has no need to be added with binders or conductive agents additionally, and the absence of material components in the slurry is also conducive to improving the homogeneity of the slurry, thereby improving the quality of the battery. Furthermore, the composite polymer can also improve the mechanical properties of the electrode sheet, endow the electrode sheet with flexibility, effectively alleviate the volume expansion of the electrode sheet during the charging and discharging process, maintain the stability of the electrode, thus further improve the transport speed of lithium ion in the electrode sheet, and improve the rate capability.

According to an embodiment of the present disclosure, the solid content and viscosity of the positive electrode slurry are not particularly limited, which can be selected by those skilled in the art according to actual needs; for example, the solid content may be 50wt%-80wt%, and the viscosity may be 3000-20000 cP. The too high solid content and viscosity of the slurry will bring the reduced homogeneity of the slurry. Furthermore, the specific type of the positive electrode active material is not particularly limited; for example, it may be at least one of NCM and NCA.

The positive electrode slurry according to an embodiment of the present disclosure contains the above composite polymer, and the composite polymer not only has the adhesive performance as the binder, which can improve its compatibility with the positive electrode active material, facilitate the positive electrode active material dispersing in the electrode sheet uniformly, increase the adhesive strength and peeling strength of the electrode sheet, and improve the rate cycle capability of the battery, but also has the electrical conductivity and ionic conductivity, which allows itself to serve as a carrier for lithium ion transport, exert an effect as the solvent of electrolyte liquid to facilitate lithium ion transporting inside the electrode sheet synergistically, and improve the rate capability of the battery. Therefore, the positive electrode slurry has no need to be added with binders or conductive agents additionally, and the absence of material components in the slurry is also conducive to improving the homogeneity of the slurry, thereby improving the quality of the battery. Furthermore, the composite polymer can also improve the mechanical properties of the electrode sheet, endow the electrode sheet with flexibility, effectively alleviate the volume expansion of the electrode sheet during the charging and discharging process, maintain the stability of the electrode, thus further improve the transport speed of lithium ion in the electrode sheet, and improve the rate capability.

In another aspect of the present disclosure, the present disclosure provides a lithium battery; according to an embodiment of the present disclosure, the lithium battery includes a positive electrode sheet prepared from the above positive electrode slurry. The lithium battery according to an embodiment of the present disclosure includes the positive electrode sheet prepared from the positive electrode slurry which is composed of the positive electrode active material and the above composite polymer, because it has the above composite polymer, and the composite polymer not only has the adhesive performance as the binder, which can improve its compatibility with the positive electrode active material, facilitate the positive electrode active material dispersing in the electrode sheet uniformly, increase the adhesive strength and peeling strength of the electrode sheet, and improve the rate cycle capability of the battery, but also has the electrical conductivity and ionic conductivity, which allows itself to serve as a carrier for lithium ion transport, exert an effect as the solvent of electrolyte liquid to facilitate lithium ion transporting inside the electrode sheet synergistically, and improve the rate capability of the battery. Meanwhile, because the positive electrode slurry has no need to be added with binders or conductive agents additionally, the absence of material components in the slurry is also conducive to improving the homogeneity of the slurry, thereby improving the quality of the battery. Furthermore, the composite polymer can also improve the mechanical properties of the electrode sheet, endow the electrode sheet with flexibility, effectively alleviate the volume expansion of the electrode sheet during the charging and discharging process, maintain the stability of the electrode, thus further improve the transport speed of lithium ion in the electrode sheet, and improve the rate capability.

In another aspect of the present disclosure, the present disclosure provides a vehicle; according to an embodiment of the present disclosure, the vehicle includes the above lithium battery. The vehicle according to an embodiment of the present disclosure includes the above lithium battery, and the lithium battery has excellent cycle performance and rate capability as well as good safety performance and consistency due to including the positive electrode sheet prepared from the above positive electrode slurry. Therefore, the battery is conducive to improving the endurance and safety performance of the vehicle.

The present disclosure will be described below with reference to specific embodiments; it should be noted that these embodiments are merely illustrative and do not limit the present disclosure in any way.

### Example 1

This example provides a composite polymer, and the composite polymer is a block copolymer of polyfurfuryl alcohol and polyoxyethylene.

A preparation method of the above composite polymer includes the following steps:
the oxalic acid and NMP were delivered to a homogenizer for stirring at a mass ratio of 1:30, then added with polyoxyethylene (purchased from Acmec, with the product number of P39860), stirred, finally added with furfuryl alcohol and stirred, so as to obtain a brown colloidal solution with a solid content of 1.2%, and the brown colloidal solution was the chain block copolymer of polyfurfuryl alcohol and polyoxyethylene, in which an average molecular mass of the block copolymer of polyfurfuryl alcohol and polyoxyethylene was 50000.

This example provides a positive electrode slurry, and the positive electrode slurry is composed of the composite polymer and a ternary material NCM.

A preparation method of the above positive electrode slurry includes the following steps:
the ternary material NCM was added into the above colloidal solution, namely, the block copolymer of polyfurfuryl alcohol and polyoxyethylene, and stirred to obtain the positive electrode slurry with a solid content of 50% and a viscosity of 3000 cP.

This example provides a positive electrode sheet, and the positive electrode sheet is composed of the positive electrode slurry and an aluminum foil.

A preparation method of the above positive electrode sheet includes the following steps:
an automatic coating machine was used for coating, the gap of the coating blade was adjusted for a target surface density of 15 mg/cm², the above positive electrode slurry was coated on the aluminum foil to form a coating layer, and the coated electrode sheet was baked at 120°C for 10 min, so as to obtain the positive electrode sheet with a positive electrode active material content of 80%.

### Example 2

This example provides a composite polymer, and the composite polymer is a block copolymer of polyfurfuryl alcohol and polyoxyethylene.

A preparation method of the above composite polymer includes the following steps:
the hydrochloric acid and dimethyl sulfoxide were delivered to a homogenizer for stirring at a mass ratio of 1:49, then added with polyoxyethylene (purchased from Acmec, with the product number of P39860), stirred, finally added with furfuryl alcohol and stirred, so as to obtain a brown colloidal solution with a solid content of 8%, and the brown colloidal solution was the chain block copolymer of polyfurfuryl alcohol and polyoxyethylene, in which an average molecular mass of the block copolymer of polyfurfuryl alcohol and polyoxyethylene was 45000.

This example provides a positive electrode slurry, and the positive electrode slurry is composed of the composite polymer and a ternary material NCA.

A preparation method of the above positive electrode slurry includes the following steps:
the ternary material NCM was added into the above colloidal solution, namely, the block copolymer of polyfurfuryl alcohol and polyoxyethylene, and stirred to obtain the positive electrode slurry with a solid content of 80% and a viscosity of 20000 cP.

This example provides a positive electrode sheet, and the positive electrode sheet is composed of the positive electrode slurry and an aluminum foil.

A preparation method of the above positive electrode sheet includes the following steps:
an automatic coating machine was used for coating, the gap of the coating blade was adjusted for a target surface density of 15 mg/cm², the above positive electrode slurry was coated on the aluminum foil to form a coating layer, and the coated electrode sheet was baked at 120°C for 10 min, so as to obtain the positive electrode sheet with a positive electrode active material content of 80%.

### Example 3

This example provides a composite polymer, and the composite polymer is a block copolymer of polyfurfuryl alcohol and polyoxyethylene.

A preparation method of the above composite polymer includes the following steps:
the oxalic acid and NMP were delivered to a homogenizer for stirring at a mass ratio of 2:45, then added with polyoxyethylene (purchased from Acmec, with the product number of P39860), stirred, finally added with furfuryl alcohol and stirred, so as to obtain a brown colloidal solution with a solid content of 18%, and the brown colloidal solution was the chain block copolymer of polyfurfuryl alcohol and polyoxyethylene, in which an average molecular mass of the block copolymer of polyfurfuryl alcohol and polyoxyethylene was 55000.

This example provides a positive electrode slurry, and the positive electrode slurry is composed of the composite polymer and a ternary material NCM.

A preparation method of the above positive electrode slurry includes the following steps:
the ternary material NCM was added into the above colloidal solution, namely, the block copolymer of polyfurfuryl alcohol and polyoxyethylene, and stirred to obtain the positive electrode slurry with a solid content of 65% and a viscosity of 4500 cP.

This example provides a positive electrode sheet, and the positive electrode sheet is composed of the positive electrode slurry and an aluminum foil.

A preparation method of the above positive electrode sheet includes the following steps:
an automatic coating machine was used for coating, the gap of the coating blade was adjusted for a target surface density of 15 mg/cm², the above positive electrode slurry was coated on the aluminum foil to form a coating layer, and the coated electrode sheet was baked at 120°C for 10 min, so as to obtain the positive electrode sheet with a positive electrode active material content of 80%.

### Comparative Example 1

In this comparative example, the binder polyvinylidene fluoride (purchased from Sigma, with the product number of SIG-182702) is used as a raw material of the positive electrode material.

This comparative example provides a positive electrode slurry, and the positive electrode slurry is composed of the polyvinylidene fluoride and a ternary material NCM.

A preparation method of the above positive electrode slurry includes the following steps:
the binder polyvinylidene fluoride and a solvent NMP were mixed and stirred, then added with a conductive agent SP, mixed and stirred, and then added with the ternary material NCM, a slurry viscosity was adjusted by NMP, and the slurry was stirred thoroughly and then give the positive electrode slurry with a solid content of 50% and a viscosity of 3000 cP. In this method, a mass ratio of polyvinylidene fluoride, NMP, SP and NCM was 1.5:65:1:96.

This comparative example provides a positive electrode sheet, and the positive electrode sheet is composed of the positive electrode slurry and an aluminum foil.

A preparation method of the above positive electrode sheet includes the following steps:
an automatic coating machine was used for coating, the gap of the coating blade was adjusted for a target surface density of 15 mg/cm², the above positive electrode slurry was coated on the aluminum foil to form a coating layer, and the coated electrode sheet was baked at 120°C for 10 min, so as to obtain the positive electrode sheet with a positive electrode active material content of 80%.

### Performance Test

Example 1 and Comparative Example 1 were tested as follows:

### (1) Scanning electron microscope (SEM): the SEM characterization was performed on the morphology of the coating layer of the positive electrode sheet.

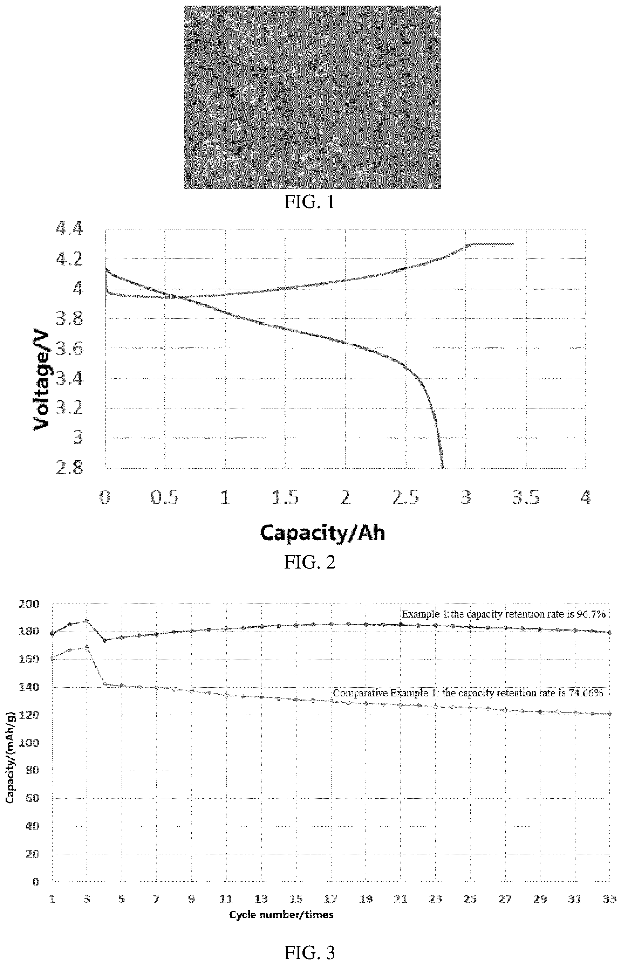

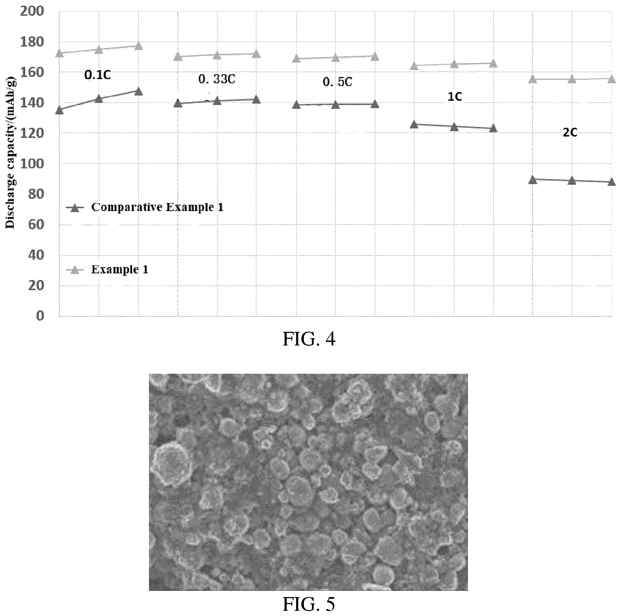

The characterization results are shown in FIG. 1 (Example 1) and FIG. 5 (Comparative Example 1).

### (2) Battery test:

Charging-discharging performance: the battery test was performed on the positive electrode sheet; test method: the constant-current and constant-voltage charging was performed at 0.33C to 4.25 V with a cut-off current of 0.05C, and the discharging was performed at 0.33C to 2.5V, so as to obtain the charging-discharging performance;
the test results are shown in FIG. 2.

Cycle performance: the battery test was performed on the positive electrode sheet; test method: the constant-current and constant-voltage charging was performed at 0.5C to 4.25 V with a cut-off current of 0.05C, and the discharging was performed at 0.5C to 2.5V. The above charging and discharging steps were alternately performed, and when the discharge capacity was 80% of the initial capacity, the test was stopped, so as to obtain the cycle performance at 0.5C, and the capacity retention rate was calculated;
the test results are shown in Table 1 and FIG. 3.

Rate capability: the battery test was performed on the positive electrode sheet; test method: the constant-current and constant-voltage charging was performed at 0.33C to 4.25 V with a cut-off current of 0.05C, and discharging was performed at different rate capacity, for example, 0.1C, 0.33C, 0.5C, 1C and 2C, to 2.5V, so as to obtain the rate capability at 0.1C, 0.33C, 0.5C, 1C and 2C;
the test results are shown in Table 1 and FIG. 4.

**Table 1**

| | | Example 1 | Example 2 | Example 3 | Comparative Example 1 |
|---|---|---|---|---|---|
| Cycle Performance | Capacity Retention Rate (%) | 96.7% | 94.3% | 90.2% | 74.66% |
| Rate Capability | 0.1C | 100.0% | 100.0% | 100.0% | 100.0% |
| | 0.33C | 97.9% | 95.6% | 92.5% | 99.0% |
| | 0.5C | 96.9% | 94.5% | 91.8% | 97.3% |
| | 1C | 94.6% | 92.3% | 89.6% | 87.0% |
| | 2C | 89.0% | 85.5% | 80.6% | 62.5% |

It can be seen by analyzing the data in Table 1 that the positive electrode sheet prepared from the composite polymer provided in the present disclosure has a capacity retention rate of more than or equal to 90.2%; when discharged at different rate capacity, the positive electrode sheet prepared from the composite polymer provided in the present disclosure has relatively small drop in discharge efficiency as increasing the rate capacity, in which the discharge efficiency is more than or equal to 89.6% at 1C rate, and more than or equal to 80.6% at 2C rate; the positive electrode sheet prepared from the composite polymer provided in the present disclosure has both excellent cycle performance and rate capability.

It can be seen by analyzing Comparative Example 1 and Example 1 that the comprehensive performance of Comparative Example 1 is not as good as that of Example 1, and the positive electrode sheet prepared from the composite polymer provided in the present disclosure has better performance than the positive electrode sheet prepared from polyvinylidene fluoride.

It can be seen by analyzing FIG. 1 and FIG. 5 that, compared with FIG. 5, FIG. 1 shows that a more uniform conductive branched network is formed among the active material obviously.

It can be seen from FIG. 2 that the positive electrode sheet prepared from the composite polymer provided in the present disclosure has low polarization during charging and discharging, and has good charging-discharging performance.

It can be seen from FIG. 3 that the capacity retention rate of Example 1 is 96.7%, and the capacity retention rate of Comparative Example 1 is 74.66%; the positive electrode sheet prepared from the composite polymer provided in the present disclosure has better cycle performance.

It can be seen from FIG. 4 that, the discharge capacity of Example 1 is higher than that of Comparative Example 1 at the same rate capacity, and has smaller variation in discharge capacity as increasing the rate capacity, and has more stable performance; the positive electrode sheet prepared from the composite polymer provided in the present disclosure has better rate capability.

## Claims

1. A composite polymer, which is a block copolymer of polyfurfuryl alcohol and polyoxyethylene.

2. The composite polymer according to claim 1, wherein the composite polymer is a chain polymer, a star polymer or a dendrimer.

3. The composite polymer according to claim 1 or 2, wherein an average molecular mass of the composite polymer is 45000-55000.

4. The composite polymer according to any one of claims 1 to 3, wherein a solid content of the composite polymer is 1.2wt%-18wt%.

5. A preparation method of the composite polymer according to any one of claims 1 to 4, comprising the following step:
mixing and stirring an initiator, a solvent, polyoxyethylene and furfuryl alcohol to obtain the composite polymer.

6. The preparation method according to claim 5, wherein the initiator is selected from at least one of oxalic acid and hydrochloric acid.

7. The preparation method according to claim 5 or 6, wherein the initiator is selected from oxalic acid.

8. The preparation method according to any one of claims 5 to 7, wherein the solvent is selected from at least one of N-methylpyrrolidone and dimethyl sulfoxide.

9. The preparation method according to any one of claims 5 to 8, wherein a mass ratio of the initiator to the solvent is (2-4):(90-98).

10. A positive electrode slurry, which is composed of a positive electrode active material and a colloidal solution, wherein the colloidal solution is the composite polymer according to any one of claims 1 to 4 or the composite polymer prepared by the method according to any one of claims 5 to 9.

11. The positive electrode slurry according to claim 10, wherein a solid content of the positive electrode slurry is 50wt%-80wt%.

12. The positive electrode slurry according to claim 10 or 11, wherein a viscosity of the positive electrode slurry is 3000-20000 cP.

13. The positive electrode slurry according to any one of claims 10 to 12, wherein the positive electrode active material is selected from at least one of NCM and NCA.

14. A lithium battery, comprising a positive electrode sheet prepared from the positive electrode slurry according to any one of claims 10 to 13.

15. A vehicle, comprising the lithium battery according to claim 14.
